# EUROPEAN PATENT APPLICATION

(11) **EP 2 605 541 A1**
(43) Date of publication of application: **19.06.2013**
(21) Application number: 11193481.6
(22) Date of filing: 14.12.2011
(51) Int. Cl.: H04R 1/10, H04R 25/00, H04M 1/60, G06F 3/16, G11B 20/10, H04M 1/725

(54) **Voice recorder for use with a hearing device**

(71) Applicant: Oticon A/S, 2765 Smørum (DK)
(72) Inventor: Aldaz, Gabriel, DK-2765 Smørum (DK); Sapiezyñski, Piotr, DK-2765 Smørum (DK)

(57) **Abstract**

Voice recorder (100) for use with a hearing device (200), wherein the voice recorder (100) comprises a microphone (10) for capturing an audio signal, a circular buffer (20) adapted to continuously buffer the most recent portion of said audio signal as a sound snippet of a predefined duration, an input device (30) to be operated by a user of the hearing device (200) and a saving means (40) adapted to save into a memory the sound snippet momentarily held in the circular buffer upon operation of the input device (30).

## Description

### TECHNICAL FIELD

The present invention relates to a voice recorder for use with a hearing device, such as a hearing aid. The present invention is furthermore related to a corresponding method and computer program for operating a voice recorder for use with a hearing device, such as a hearing aid.

### BACKGROUND ART

US 2010/0119100 A1 and US 2008/0192961 A1 each disclose a hearing aid comprising means to record and playback upcoming audio signals such as voice notes or concerts. Furthermore, known from the prior art are software applications for Smartphones that allow for upcoming audio signals to be recorded and to be played back via a headset.

It is an object of the present invention to provide an alternative voice recorder for use with a hearing device that provides enhanced functionality for a user of the hearing device. It is also an object of the present invention to provide a corresponding method and computer program for operating a voice recorder for use with a hearing device.

### DISCLOSURE OF INVENTION

According to a first aspect of the invention, the object is achieved by a voice recorder for use with a hearing device, wherein the voice recorder comprises a microphone for capturing an audio signal, a circular buffer adapted to continuously buffer the most recent portion of said audio signal as a sound snippet of a predefined duration, an input device adapted to be operated by a user of the hearing device and a saving means adapted to save into a memory the sound snippet momentarily held in the circular buffer upon operation of the input device.

The present invention recognizes that a hearing-device user, in particular a hearing-aid user, often misses important information, such as names or web addresses, during a conversation and that in such case he or she has to ask e.g. a friend or colleague to repeat the information at a later time. The present invention also recognizes that prior art voice recorders for use with a hearing device require the whole conversation to be saved from the very beginning. Consequently, a user wishing to access certain missed information in the recording has to browse through a lot of sound material to find it. Furthermore, the user has to invoke recording before engaging in a conversation, i.e. before noticing or suspecting that information is missing, which is easy to forget. Having to ask others for help or having to laboriously search for missed information gives, in particular a hearing-aid user, a feeling of being dependent and out of control of the situation.

According to the present invention it is suggested to save a sound comprising missed information after the sound carrying that information has been heard but maybe not understood. To provide for that, a voice recorder for use with a hearing device employs a circular buffer. A circular buffer may be a FIFO buffer of a predetermined size which is adapted to continuously overwrite the "oldest" content buffered therein. This allows an endless buffering of an audio signal - i.e. an electrical or digital representation of the sound - that is fed into the buffer, e.g. by a microphone. The momentary content of the buffer is called a "sound snippet". Because of the described endless nature of the buffer, the sound snippet always carries the most recent portion of the audio signal. The duration of the sound snippet is determined by the size of the buffer and defines the amount of time the buffer can "look" into the past of a conversation or speech. Once a user believes to have missed a piece of information, he or she operates an input device thereby causing a saving means to instantly save the sound snippet in a memory for later retrieval, e.g. in the form of a file, which allows easy access and tagging at a later time. The so saved sound snippet holds the piece of information important for the user, namely that very piece of information that occurred prior to the operation of the input device, provided the user operates the input device before the audio signal holding the information is overwritten in the buffer.

In the following, potential embodiments of the voice recorder for use with a hearing device are described. Additional features explained in the context of different embodiments may be combined with each other to form further embodiments, as long as they are not explicitly described as forming mutually exclusive alternatives to each other.

In a preferred embodiment the input device is adapted to allow control of the size of the circular buffer. By changing the size of the circular buffer, the user is enabled to adapt the duration of the sound snippet according to circumstances. If, for example, a speaker speaks rather slow it might be desirable for the user to increase the size of the circular buffer to extend the duration of the sound snippet.

In a further preferred embodiment, to provide for an even more comfortable access to a saved sound snippet, the voice recorder comprises a transmission means adapted to forward the saved sound snippet to a receiving means comprised by a user's hearing device. From the receiving means the sound snipped may be fed to a speaker, or any other output transducer comprised by the hearing device, for making the sound snippet directly audible to the user.

The transmission means may be adapted to forward the sound snippet to the receiving means upon a user input on the input device. The input device may accordingly be adapted to provide for that. Advantageously this simplifies a user interface, since the input device may be capable of both causing the sound snippet to be saved into a memory by a saving means and causing the saved sound snippet to be forwarded to a receiving means by the transmission means.

The transmission means may be adapted to engage with a hearing device's receiving means in a wireless connection, preferably a Bluetooth connection, allowing for a sound snippet to be wirelessly transferred thereby. In such a way a voice recorder may be placed remote from a hearing device, e.g. on a conference table and close to a speaker to ensure for optimal reception of sounds.

In a preferred embodiment the voice recorder is embodied as part of a Smartphone. As a Smartphone is a device for everyday use, this advantageously provides for the voice recorder to be used inconspicuously on the one hand and avoids having to carry around an additional device on the other.

According to a second aspect of the invention, the object is achieved by a hearing device comprising a voice recorder as described with respect to the first aspect of the invention. To form a functional unit between hearing device and voice recorder, a receiving means comprised by the hearing device may be connected to the transmission means of the voice recorder. The hearing device of the second aspect of the invention shares the advantages of the voice recorder of the first aspect of the invention.

In a preferred embodiment according to the second aspect of the invention, the voice recorder is, except for the input device, housed by the hearing device. This allows for the system voice recorder/hearing device to be dimensioned particularly compact. If, for example, the hearing device is designed as a CIC hearing aid residing completely and practically invisible in the ear canal of a user, so is the voice recorder. As the sound snippets may contain very personal information, a voice recorder residing close to a user at all times provides better control over sensitive data for the user.

The input device may be designed as a component separate from the hearing device, for example having its own housing. The input device may be embodied as part of a Smartphone or may be integrated in such. Alternatively, the input device may be embodied as part of a remote control device for the hearing device. Preferably the input device is adapted to engage with the hearing device in a wireless connection, preferably a Bluetooth connection, allowing to effect the saving of the sound snippet from a distance. In such way the input device functions as a remote control for the voice recorder. This is especially favourable if the hearing device comprising the voice recorder is designed to be very compact and or to be placed so that its user interface is not easily accessible.

To provide almost identical audio characteristics of a sound picked up by the hearing device and the voice recorder, the hearing device and the voice recorder may share the same microphone. This furthermore allows for the system voice recorder/hearing device to be more compact and to be manufactured more economically.

According to a third aspect of the current invention, the object is achieved by a method for operating a voice recorder for use with a hearing device, the method comprising:
- capturing an audio signal using a microphone;
- continuously buffering the most recent portion of said audio signal as a sound snippet of a predefined duration in a circular buffer;
- awaiting a user input to occur via an input device;
   and after a user input occurred:
- saving into a memory the sound snippet momentarily held in the circular buffer by means of a saving means.

In a preferred embodiment the method comprises:
- forwarding the saved sound snippet by means of a transmission means to allow for the sound snippet to be received by a receiving means comprised by a hearing device, and to be made audible to a user of the hearing device by an output transducer.

According to a fourth aspect of the current invention, the object is achieved by a computer program for operating a Smartphone as a voice recorder, the computer program comprising program code means for causing the Smartphone to carry out the steps of the method according to the third aspect of the invention, when the computer program is run on the Smartphone.

It will be understood that the third and fourth aspects of the invention respectively shares the corresponding advantages of the first and second aspects of the invention.

### BRIEF DESCRIPTION OF THE DRAWINGS

Fig. 1 schematically depicts an embodiment of a voice recorder according to the first aspect of the invention to be used with a hearing device depicted,
Fig. 2 schematically depicts an embodiment of a hearing device comprising a voice recorder according to the second aspect of the invention,
Fig. 3 schematically depicts an alternative embodiment of a hearing device comprising a voice recorder according to the second aspect of the invention, and
Fig. 4 schematically depicts, by means of a flow chart, an embodiment of an operating method for a voice recorder in accordance with the fourth aspect of the invention.

In the present context, a "hearing device" refers to a device, such as e.g. a hearing aid or an active ear-protection device, which is adapted to improve or augment the hearing capability of an individual by receiving acoustic signals from the individual's surroundings, modifying the acoustic signals electronically and providing audible signals to at least one of the individual's ears. Such audible signals may e.g. be provided in the form of acoustic signals radiated into the individual's outer ears, acoustic signals transferred as mechanical vibrations to the individual's inner ears through the bone structure of the individual's head and/or electric signals transferred directly or indirectly to the cochlear nerve of the individual. The hearing device may be configured to be worn in any known way, e.g. as a unit arranged behind the ear with a tube leading radiated acoustic signals into the ear canal or with a speaker arranged close to or in the ear canal, as a unit entirely or partly arranged in the pinna and/or in the ear canal, as a unit attached to a fixture implanted into the skull bone, etc. More generally, a hearing device comprises an input transducer for receiving an acoustic signal from an individual's surroundings and providing a corresponding electric input signal, a signal processing circuit for processing the electric input signal and an output transducer for providing an audible signal to the individual in dependence on the processed signal.

A "hearing system" refers to a system comprising one or two hearing devices, and a "binaural hearing system" refers to a system comprising one or two hearing devices and being adapted to provide audible signals to both of the individual's ears. Hearing systems or binaural hearing systems may further comprise "auxiliary devices", which communicate with the hearing devices and affect and/or benefit from the function of the hearing devices. Auxiliary devices may be e.g. remote control devices, audio gateway devices, mobile phones, public-address systems, car audio systems or music players. Hearing devices, hearing systems or binaural hearing systems may e.g. be used for compensating for a hearing-impaired person's loss of hearing capability or augmenting a normal-hearing person's hearing capability.

### MODE(S) FOR CARRYING OUT THE INVENTION

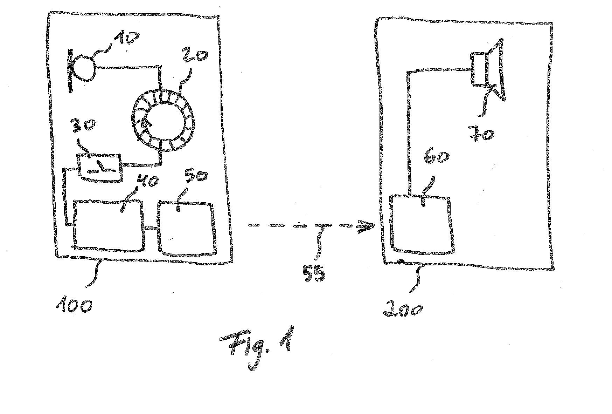

A voice recorder 100 in Fig. 1 is used in conjunction with a hearing device 200. The voice recorder 100 comprises a microphone 10, a circular buffer 20, an input device 30, a saving means 40 and a transmission means 50. The hearing device 200 comprises a receiving means 60 and a speaker 70. The microphone 10 continuously captures an audio signal e.g. the voice of a conference speaker. The circular buffer 20 continuously buffers the most recent portion of said audio signal as a sound snippet of a predefined duration of 20 seconds.

200 seconds from the beginning of the speech, the hearing device user believes to have missed a piece of information and operates the input device 30, thereby causing the saving means 40 to save into a memory as a first file the sound snippet momentarily held in the circular buffer 20. At the moment of operation of the input device 30, the circular buffer 20 holds a sound snippet of seconds 180 to 200 of the speech. Therefore the saving means saves the snippet holding information of seconds 180 to 200 of the speech as a first file to be accessible by the user. Prior information of seconds 0 to 180 has been written over because of the circular nature of buffer 20.

300 seconds from the beginning of the speech, the user decides to increase the size of the circular buffer 20 to be able to hold a sound snippet of 30 seconds. For that purpose the input device 30 is adapted to also allow control of the size of the circular buffer 20.

400 seconds from the beginning of the speech, the hearing device user believes to have missed another piece of information and operates the input device 30 again, thereby causing the saving means 40 to save into the memory as a second file the sound snippet momentarily held in the circular buffer 20. At the moment of operation of the input device 30, the circular buffer 20 holds a sound snippet of seconds 370 to 400 of the speech. Therefore the saving means saves the sound snippet holding information of seconds 370 to 400 of the speech as a second file to be accessible by the user.

The transmission means 50 comprised by the voice recorder 100 is adapted to forward the sound snippet saved by the saving means 40 to the receiving means 60 comprised by a user's hearing device 200. The receiving means 60 is connected to a speaker 70 comprised by the hearing device 200 for making the sound snippet audible to the user.

The transmission means 50 and the receiving means 60 are provided as Bluetooth modules, allowing for a Bluetooth connection 55 to be established there between and a sound snippet to be wirelessly transferred thereby. The transmission means 50 is adapted to forward the sound snippet to the receiving means 60 upon a user input on the input device 30. The input device 30 is adapted to receive such a user input accordingly.

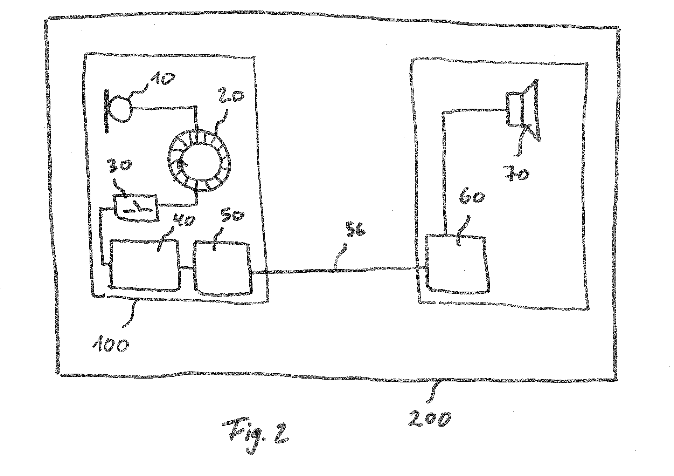

Depicted in Fig. 2 is a hearing device 200 having a receiving means 60 and a speaker 70 and comprising and enclosing a voice recorder 100 with a microphone 10, a circular buffer 20, a input device 30, a saving means 40 and a transmission means 50. The embodiment depicted in Fig. 2 provides the same buffering and saving functionality as described with respect to the embodiments of Fig. 1. In contrast to the embodiment described with respect to Fig. 1, the transmission means 50 and the receiving means 60 depicted in Fig. 2 are electrically connected to each other via connection 56, allowing a "wired" forwarding of a sound snippet from the transmission means 50 to the receiving means 60.

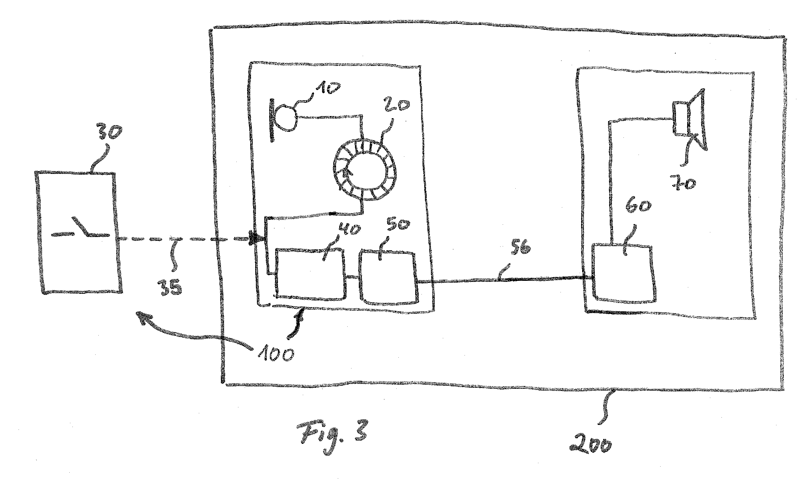

Depicted in Fig. 3 is a hearing device 200 having a receiving means 60 and a speaker 70 and comprising and enclosing a voice recorder 100 with a microphone 10, a circular buffer 20, a saving means 40 and a transmission means 50. A input device 30 comprised but not enclosed by the hearing device 200 is designed as a component separate from the hearing device 200. The input device 30 is adapted to engage with the hearing device 200 in a wireless connection 35, allowing to effect the saving of the sound snippet from a distance. Beyond that, the embodiment depicted in Fig. 3 provides the same buffering, saving and transmission functionality as described with respect to the embodiments of Fig. 1 and Fig. 2.

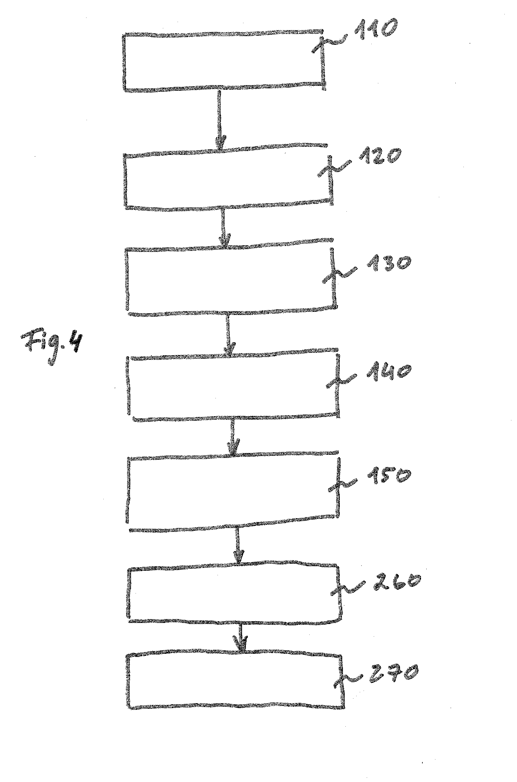

In a first step 110 of an operating method for a voice recorder in Fig. 4 an audio signal is captured using a microphone. Continuously, the most recent portion of the audio signal is recorded as a sound snippet of a predefined duration in a circular buffer in a second step 120. In a third step 130 a user input is awaited to occur on a input device. The first step 110, the second step 120 and the third step 130 are carried out simultaneously. After a user input occurred on the input device, in a fourth step 140, the sound snippet momentarily held in the circular buffer is saved to a file by means of a saving means. In a fifth step 150 the sound snippet saved by the saving means as a file is forwarded by a transmission means of the voice recorder to a receiving means of a hearing device. In a sixth step 260 the sound snippet is received by a receiving means comprised by the hearing device, and made audible to a user of the hearing device by an output transducer in a seventh step 270.

The input device 30 may be implemented as one or more buttons, sliders, wheels, rockers or the like, or any suitable combination hereof, which is well known in the art.

The circular buffer 20 and the saving means 40 may be implemented e.g. in dedicated digital circuits, in programmable logic, in a microprocessor or in any other way known in the art.

The memory may be a volatile memory, e.g. RAM, or a non-volatile memory, such as flash memory or EEPROM.

The wireless connections 35, 55 as well as the transmission means 50 and the receiving means 60 may be implemented using any form of wireless transmission, i.e. optical transmission or radio transmission, such as Bluetooth or any other suitable radio signals and/or communication protocols. In Bluetooth, the Synchronous Connection Oriented (SCO) link may be advantageous.

The circular buffer 20, the input device 30, the saving means 40, the transmission means 50 and the receiving means 60 are preferably implemented mainly as digital circuits operating in the discrete time domain, but any or all parts hereof may alternatively be implemented as analog circuits operating in the continuous time domain. Digital functional blocks of the voice recorder 100 and/or the hearing device 200 may be implemented in any suitable combination of hardware, firmware and software and/or in any suitable combination of hardware units. Furthermore, any single hardware unit may execute the operations of several functional blocks in parallel or in interleaved sequence and/or in any suitable combination thereof.

## Claims

1. Voice recorder (100) for use with a hearing device (200), wherein the voice recorder (100) comprises a microphone (10) for capturing an audio signal, a circular buffer (20) adapted to continuously buffer the most recent portion of said audio signal as a sound snippet of a predefined duration, a input device (30) adapted to be operated by a user of the hearing device (200) and a saving means (40) adapted to save into a memory the sound snippet momentarily held in the circular buffer upon operation of the input device (30).

2. Voice recorder (100) according to claim 1, wherein the input device (30) is further adapted to allow control of the size of the circular buffer (20).

3. Voice recorder (100) according to claim 1 or 2, wherein the voice recorder (100) comprises a transmission means (50) adapted to forward the saved sound snippet to a receiving means (60) comprised by a user's hearing device (200), the receiving means (60) preceding an output transducer (70) for making the sound snippet audible to the user.

4. Voice recorder (100) according to claim 3, wherein the transmission means (50) is adapted to engage with a receiving means (60) comprised by a hearing device (200) in a wireless connection (55) allowing for a sound snippet to be wirelessly transferred thereby.

5. Voice recorder (100) according to any of the claims 1 to 4 being embodied in a Smartphone.

6. Hearing device (200) comprising a voice recorder (100) according to any of the claims 1 to 3, wherein a receiving means (60) comprised by the hearing device (200) is connected to the transmission means (50) of the voice recorder (100).

7. Hearing device (200) according to claim 6, wherein the voice recorder (100) except for the input device (30) is housed by the hearing device (200).

8. Hearing device (200) according to claim 6 or 7, wherein the hearing device (200) and the voice recorder (100) share the microphone (10).

9. Hearing device (200) according to claim 8, wherein the input device (30) is designed as a component separate from the hearing device (200) and adapted to engage with the hearing device (200) in a wireless connection (35), allowing to effect the saving of the sound snippet from a distance.

10. Hearing device (200) according to any of the claims 6 to 9, wherein the input device (30) is embodied as part of a Smartphone.

11. Method for operating a voice recorder for use with a hearing device, comprising:
- capturing (110) an audio signal using a microphone;
- continuously buffering (120) the most recent portion of said audio signal as a sound snippet of a predefined duration in a circular buffer;
- awaiting (130) a user input to occur via an input device;
and after a user input occurred:
- saving (140) into a memory the sound snippet momentarily held in the circular buffer by means of a saving means.

12. Method according to claim 11, comprising:
- forwarding (150) the saved sound snippet by means of a transmission means to allow for the sound snippet to be received (260) by a receiving means comprised by a hearing device, and to be made audible (270) to a user of the hearing device by an output transducer (70).

13. A computer program for operating a Smartphone as a voice recorder, the computer program comprising program code means for causing the Smartphone to carry out the method as claimed in claim 11 or 12, when the computer program is run on the Smartphone.
